# EUROPEAN PATENT SPECIFICATION

(11) **EP 0 693 004 B1**
(45) Date of publication and mention of the grant of the patent: **04.08.1999**
(21) Application number: 94914360.6
(22) Date of filing: 08.04.1994
(51) Int. Cl.: B07B 1/46, B07B 1/48, B01D 29/01, B01D 29/44

(54) **SCREEN FOR SEPARATING SOLIDS FROM DRILLING FLUID**
SIEB ZUM TRENNEN VON FESTSTOFFEN AUS EINER BOHRFLÜSSIGKEIT
TAMIS DE SEPARATION DES SOLIDES D'UNE BOUE DE FORAGE

(30) Priority: 08.04.1993 US 45489; 30.04.1993 US 56123
(43) Date of publication of application: 24.01.1996
(73) Proprietor: Tuboscope I/P Inc., Houston, TX 77051 (US)
(72) Inventor: LEONE, Vincent, D., Sr., Houston, TX 77077 (US); WALKER, Jeffrey, E., Lafayette, LA 70501 (US); DUGAL, Robert, L., Youngsville, LA 70592 (US)
(74) Representative: Lucas, Brian Ronald
(86) International application number: EP9401118
(87) International publication number: WO9423849

(56) References cited:
- EP-A- 0 169 698
- DE-A- 2 256 272
- DE-A- 2 630 282
- FR-A- 2 407 026
- US-A- 4 575 421

## Description

This invention relates to a screen for separating solids from drilling fluid, a vibratory shaker fitted with such a screen and a sheet of perforate material for use in said screen.

Drilling fluid is used to maintain the tip of a drill cool and to carry solids to the surface of the wellbore. Once at the surface the solids are removed from the drilling fluid which is reused.

One piece of apparatus commonly used to separate the solids from the drilling fluid is a vibratory shaker.

Vibratory shakers generally comprise a frame which, in use, oscillates back and forth.

Shortly before use a screen is unrolled and placed on the frame. The screen remains in place until it fails at which time the screen is replaced. Because of the highly abrasive nature of the solids in drilling fluid the life of the screen is relatively short.

In order to increase screen life manufacturers have resorted to the use of screens fabricated from large diameter threads which are interwoven to form a grid. Whilst this prolongs screen life (typically 2 - 3 days) the conductance (volumetric throughput) of the screen is severely restricted.

In an attempt to increase conductance it has been proposed, for example in US-A-4 575 421, to fabricate a screen from a perforated plate to which was bonded a sheet of relatively fine mesh. This solution provided excellent conductance. However, the screens themselves were extremely delicate and often needed replacement every 1-2 days.

DE-A-2 630 282 discloses a screen which comprises an outer frame covered with a layer of perforate material. The outer frame is provided with a plurality of support members, some of which extend across the frame and others of which extend between adjacent support members and between the frame and the support member adjacent thereto.

A further problem, which is discussed in greater detail hereinafter, is helping to ensure that the contaminated drilling fluid which is introduced onto the screen is treated generally uniformly.

The aim of at least preferred embodiments of the present invention is to provide a screen which has a relatively high conductance, a relatively high working life and the ability to help ensure that contaminated drilling fluid which is introduced onto the screen is treated generally uniformly.

According to the present invention there is provided a screen for separating solids from drilling fluid in a vibratory shaker, which screen comprises at least one sheet of mesh secured to a sheet of perforate material, characterized in that said screen comprises an outer frame, and at least one support member which extends across said outer frame, wherein said sheet of perforate material is secured to said outer frame and said support member, wherein said at least one sheet of mesh is secured to said sheet of perforate material, and wherein said sheet of perforate material comprises two intersecting sets of substantially parallel rows of ribs which are inclined to opposite sides of said at least one support member.

Preferred embodiments of a screen in accordance with the present invention have a typical life of from 7 to 10 days, i.e. two to three times longer than the prior art screens described.

The present invention also has a further significant advantage. In particular, if a prior art screen was inadvertently pierced, for example by dropping a tool on the screen, the damage would quickly spread over the entire screen rendering it useless in a matter of minutes. In contrast, with screens in accordance with the present invention the damage can be confined between adjacent support members or between a support member and the frame. Such a small area can rapidly be patched albeit at the cost of some throughput.

Typically, said ribs will intersect at an angle of from 20° to 90°, and preferably 60°.

Advantageously, said sheet further comprises one set of rows of transverse ribs which extend across said screen generally perpendicular to said support members and which pass through the intersection of said ribs of said two sets of ribs.

Preferably, a plurality of support members extend across said outer frame and said sheet of perforate material is secured to each.

Advantageously, the support members are disposed at centres between 140 and 170 mm.

Another aspect of the present invention provides a vibratory shaker fitted with a screen in accordance with the invention wherein said at least one support member extends in the intended direction of travel of said solids across said screen.

The present invention also provides in or for use in a screen according to the present invention, a sheet of perforate material comprising two edges and two sets of rows of ribs which are inclined to one another and to said edges and at least one sheet of mesh secured there-to.

Preferably, said ribs intersect at an angle of from 20° to 90°.

Advantageously, said sheet includes one set of rows of transverse ribs which extend across said screen and which pass through the intersection of said ribs of said two sets of ribs.

Preferably, said edges are provided with members for attaching the sheet to a vibratory shaker.

For a better understanding of the invention reference will now be made, by way of example, to the accompanying drawings, in which:-
Figure 1 is a perspective view showing the bottom of one embodiment of a screen which was made during the development of the present invention;
Figure 2 is a partially cut away top plan view of the screen shown in Figure 1;
Figure 3 is a bottom plan view of one embodiment of a screen in accordance with the present invention; and
Figure 4 is a top plan view, to an enlarged scale, of part of the screen encircled and identified by the reference letter "A" in Figure 3.

Referring to the drawings, there is shown a screen which is generally identified by reference number 1. The screen 1 comprises an outer frame 2 which is generally rectangular and comprises four frame members 3, 4, 5 and 6.

The frame member 3 and 5 are each 107cm (42.35 inches) long whilst the frame members 4 and 6 are each 74cm (29 inches) long. All the frame members 3, 4, 5, 6 have a 2.54cm x 2.54cm (1 inch x 1 inch) cross-section.

Five support members 7, 8, 9, 10, 11 extend between the frame members 3 and 5 and define six bays 12, 13, 14, 15, 16, 17 of equal width.

A rod 18 extends from the frame member 4 to the frame member 6 and is attached to each of the support members 7, 8, 9, 10 and 11 to maintain them properly spaced from one another.

A sheet 19 of perforate material is bonded to the frame members 3, 4, 5, 6 and the support members 7, 8, 9, 10, 11. The sheet 19 is made from steel and comprises a plurality of square holes 20 which are each 2.54cm x 2.54cm (1 inch x 1 inch). The square holes 20 are arranged in rows, for examples rows 21, 22, 23. The square holes 20 in each row 21, 22, 23 are separated by approximately 3mm (1\8 inch) and the rows 21, 22, 23 themselves are separate by approximately 3mm (1/8 inch). The square holes in alternate rows are aligned with one another but are offset from the square holes in adjacent rows as shown.

The upper surface of the sheet 19 is covered with an adhesive and a first sheet of mesh 24 is bonded thereto. If desired further sheets of mesh 25, 26 may be bonded to the sheet 19 at the same time as the first sheet of mesh 24. Typically, the mesh 23, 24, 25 will have from 40 to 270 openings per linear inch (16 to 106 openings per linear cm) with 60 to 180 openings per linear inch (24 to 71 openings per linear cm) being more usual.

In use, several screens 1 are simply laid between the side rails in the base of a vibratory shaker and secured in place. The vibratory shaker is then set in motion. When contaminated drilling fluid is introduced onto the screens the drilling fluid passes through the screens whilst the solids are retained on the screen in the usual manner. The screens are normally inclined by a few degrees so that the solids travel to the lower end of the screen and fall into a hopper for disposal or further processing. It should be noted that the screens 1 are arranged so that their support members 7, 8, 9, 10 and 11 extend along the vibratory shaker in the direct of travel of the solids.

It will be appreciated that existing vibratory shakers are provided with support beams which are welded in place. Ideally these should be removed to obtain full conductance. However, we have found that the screens 1 may simply be laid over the support beams if desired.

Whilst the sheet 19 is preferably bonded to the frame members, 3, 4, 5, 6 and the support members 7, 8, 9, 10, 11 it could also be secured by, for example continuous welding, spot welding, rivets and screws.

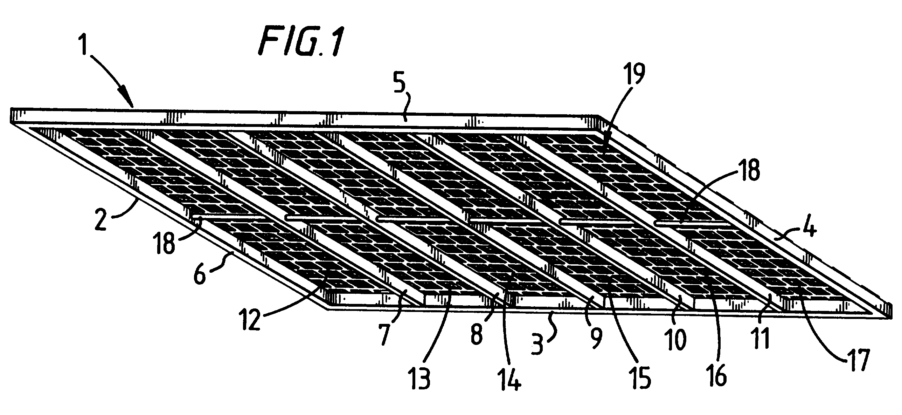

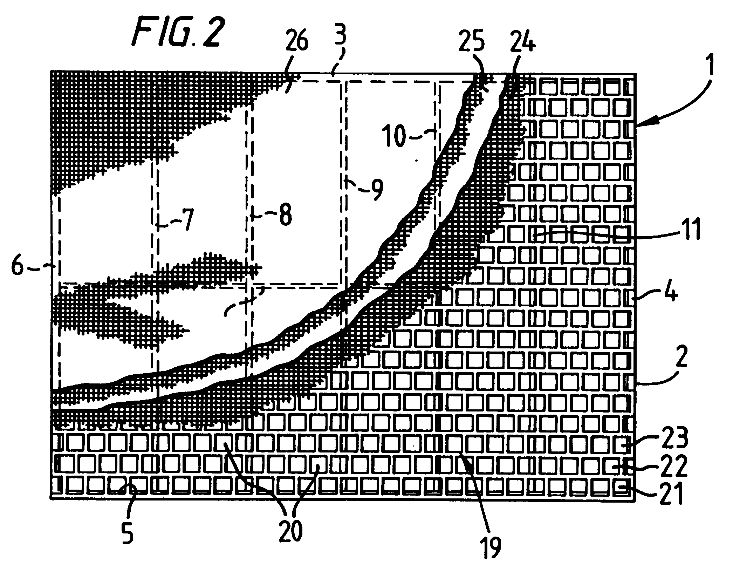

During tests with the screen shown in Figure 2, it was found that, contaminated drilling fluid tended to move linearly along the screen 1 with little movement transverse to the direction of vibration. As a result, with the exception of when it passed over the metal strips between the rows 21, 22; 22,23 some contaminated drilling fluid was nearly always over a square hole. In contrast, a small proportion of the drilling fluid was only over a square hole for part of the time. In particular, the small proportion which passed over the ribs between the rows 21, 22; 22, 23 and over the ribs between adjacent squares in the same row. Although this problem is partially mitigated by offsetting the squares in alternate rows as disclosed in Figures 1 and 2, the situation was not entirely satisfactory.

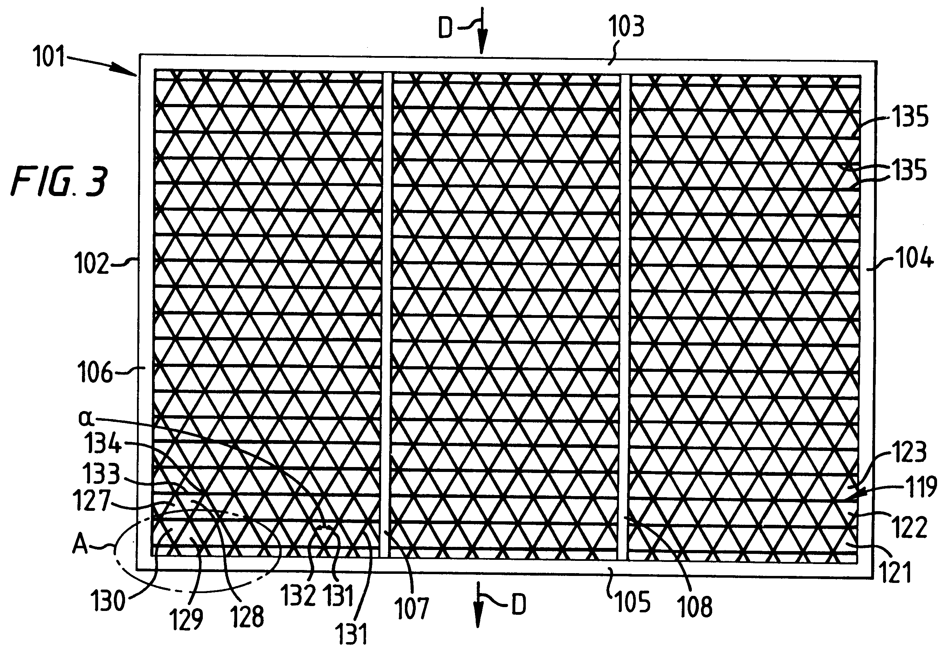

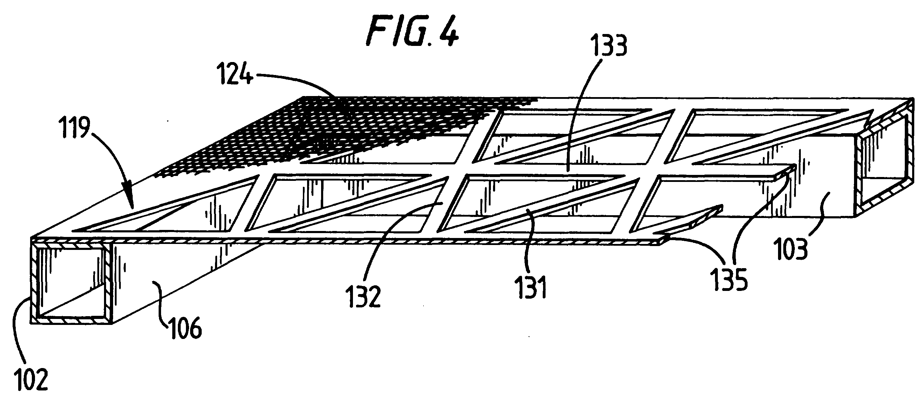

The screen shown in Figures 3 and 4 addresses this problem. In Figures 3 and 4 parts having similar function to parts shown in Figures 1 and 2 have been given the same reference numerals increased by 100.

As shown in Figures 3 and 4 a plurality of triangular openings 127, 128, 129, 130 are punched out of the sheet 119. The triangular openings 127, 128 are arranged in rows 121, 122, 123. Adjacent triangular openings 127, 128 in each row are inverted relative to one another whilst the triangular openings 128 and 129 in adjacent rows 121, 122 are arranged so that either their bases 133 or their apices 134 contact one another. This construction results in the formation of rows of diagonal ribs 131 and 132 which are inclined to opposite sides of the support members 107, 108 and which intersect one another at an angle α of approximately 60°.

It will be noted that the bases 133 of the triangles extend across the screen 101 and form traverse ribs 135 which are generally perpendicular to the support members 107, 108. In use, contaminated drilling fluid passes over the screen 101 in the direction of the arrows D. It will be appreciated that the contaminated drilling fluid is above one or other triangular opening for much of the time whilst it traverses the screen 101.

Various modification to the arrangement shown in Figures 3 and 4 are envisaged, for example the angle could vary from 20° to 90°. In addition, the bases 133 could conceivably be dispensed with although this would significantly weaken the sheet 119. The ribs 131, 132 in each set of ribs are preferably equally inclined to opposite sides of the support members 107, 108 although this is not absolutely essential.

It would also be possible for the sheet 119, together with layer(s) of mesh 124 to be sold in sheets or in rolls for use in conventional vibratory shakers. When sold for use in conventional vibratory shakers opposite edges of the sheet 119 may be provided with members for attaching the sheet 119 to the vibratory shaker. Such members may be, for example of [-shape cross-section.

## Claims

1. A screen (101) for separating solids from drilling fluid in a vibratory shaker, which screen (101) comprises at least one sheet of mesh (124) secured to a sheet (119) of perforate material, characterized in that said screen (101) comprises an outer frame (102), and at least one support member (107, 108) which extends across said outer frame (102), wherein said sheet (119) of perforate material is secured to said outer frame (102) and said support member (107, 108), wherein said at least one sheet of mesh (124) is secured to said sheet (119) of perforate material, and wherein said sheet (119) of perforate material comprises two intersecting sets of substantially parallel rows of ribs (131, 132) which are inclined to opposite sides of said at least one support member (107, 108).

2. A screen as claimed in Claim 1, characterized in that said ribs (131, 132) intersect at an angle α of from 20° to 90°.

3. A screen as claimed in Claim 2, characterized in that angle α is 60°.

4. A screen as claimed in Claim 2, 3 or 4, characterized in that said sheet (119) further comprises one set of rows of transverse ribs (135) which extend across said screen (101) generally perpendicular to said support members (107, 108) and which pass through the intersection of said ribs of said two sets of ribs (131, 132).

5. A screen as claimed in any preceding claim, characterized in that a plurality of support members (107, 108) extend across said outer frame (102) and said sheet (119) of perforate material is secured to each.

6. A screen as claimed in Claim 5, wherein said support members (107, 108) are disposed at centres between 140 and 170 mm.

7. A vibratory shaker fitted with a screen (101) as claimed in any preceding Claim, wherein said at least one support member (107, 108) extends in the intended direction of travel (D) of said solids across said screen (101).

8. In or for use in a screen as claimed in Claim 1, a sheet (119) of perforate material comprising two edges and two sets of rows of ribs (131, 132) which are inclined to one another and to said edges, and at least one sheet of mesh (124) secured thereto.

9. A sheet as claimed in Claim 8, wherein said ribs (131, 132) intersect at an angle α of from 20° to 90°.

10. A sheet as claimed in Claim 8 or 9, including one set of rows of transverse ribs (135) which extend across said screen (101) and which pass through the intersection of said ribs of said two sets of ribs (131, 132).

11. A sheet as claimed in Claim 8, 9 or 10, wherein said edges are provided with members for attaching the sheet (119) to a vibratory shaker.

## Patentansprüche

1. Ein Sieb (101) zum Trennen von Feststoffen aus einer Bohrflüssigkeit In einem Vibrationsrüttler, wobei dieses Sieb (101) wenigstens eine Lage aus Maschen (124) aufweist, welche an einer Lage (119) aus durchlöchertem Material befestigt ist, **dadurch gekennzeichnet**, daß das genannte Sieb (101) einen äußeren Rahmen (102) und wenigstens ein Tragteil (107, 108) aufweist, welches sich quer über den genannten äußeren Rahmen (102) erstreckt, wobei die genannte Lage (119) aus durchlöchertem Material an dem genannten äußeren Rahmen (102) und an dem genannten Tragteil (107, 108) befestigt ist, wobei die genannte wenigstens eine Lage aus Maschen (124) an der genannten Lage (119) aus durchlöchertem Material befestigt ist und wobei die genannte Lage (119) aus durchlöchertem Material zwei sich kreuzende Sätze aus im wesentlichen parallelen Reihen von Rippen (131, 132) aufweist, welche zu gegenüberliegenden Seiten des genannten wenigstens einen Tragteils (107, 108) schräg sind.

2. Ein Sieb, wie in Anspruch 1 beansprucht, **dadurch gekennzeichnet**, daß die genannten Rippen (131, 132) sich unter einem Winkel α im Bereich von 20° bis 90° kreuzen.

3. Ein Sieb, wie in Anspruch 2 beansprucht, **dadurch gekennzeichnet**, daß der Winkel α 60° ist.

4. Ein Sieb, wie in Anspruch 2, 3 oder 4 beansprucht, **dadurch gekennzeichnet**, daß die genannte Lage (119) weiterhin einen Satz von Reihen aus Querrippen (135) aufweist, welche sich quer über das genannte Sieb (101) im wesentlichen rechtwirklig zu den genannten Tragteilen (107, 108) erstrecken und welche durch die Kreuzung der genannten Rippen der genannten zwei Sätze von Rippen (131, 132) verlaufen.

5. Ein Sieb, wie in einem der vorhergehenden Ansprüche beansprucht, **dadurch gekennzeichnet**, daß eine Mehrzahl von Tragteilen (107, 108) sich quer über den genannten äußeren Rahmen (102) erstreckt und daß die genannte Lage (119) aus durchlöchertem Material an jedem Tragteil (107, 108) befestigt ist.

6. Ein Sieb, wie in Anspruch 5 beansprucht, bei welchem die genannten Tragteile (107, 108) an Mitten zwischen 140 und 170 mm angeordnet sind.

7. Ein Vibrationsrüttler, der mit einem Sieb (101) ausgerüstet ist, wie in einem der vorhergehenden Ansprüche beansprucht, wobei bei dem Vibrationsrüttler das genannte wenigstens eine Tragteil (107, 108) sich in der beabsichtigten Richtung des Verlaufs (D) der genannten Feststoffe quer über das genannte Sieb (101) erstreckt.

8. Bei einem Sieb, wie in Anspruch 1 beansprucht, oder zur Verwendung bei einem Sieb, wie in Anspruch 1 beansprucht, sind vorgesehen: eine Lage (119) aus durchlöchertem Material, welche zwei Ränder und zwei Sätze aus Reihen von Rippen (131, 132) aufweist, welche zueinander und zu den genannten Rändern schräg sind, und wenigstens eine Lage aus Maschen (124), welche an der Lage aus durchlöchertem Material befestigt ist.

9. Eine Lage, wie in Anspruch 8 beansprucht, bei welcher die genannten Rippen (131, 132) sich unter einem Winkel α im Bereich von 20° bis 90° kreuzen.

10. Eine Lage, wie in Anspruch 8 oder 9 beansprucht, einen Satz aus Reihen von Querrippen (135) aufweisend, welche sich quer über das genannte Sieb (101) erstrecken und welche durch die Kreuzung der genannten Rippen der genannten zwei Sätze von Rippen (131, 132) verlaufen.

11. Eine Lage, wie in Anspruch 8, 9 oder 10 beansprucht, bei welcher die genannten Ränder mit Elementen versehen sind, um die Lage (119) an einem Vibrationsrüttler anzubringen.

## Revendications

1. Crible (101) pour séparer les matières solides d'un fluide de forage dans un secoueur vibrant, crible (101) qui comprend au moins une plaque grillagée (124) fixée à une plaque (119) de matériau perforé, caractérisé en ce que ledit crible (101) comprend un châssis extérieur (102) et au moins un élément de support (107, 108) qui s'étend à travers ledit châssis extérieur (102), dans lequel ladite plaque (119) de matériau perforé est fixée audit châssis extérieur (102) et audit élément de support (107, 108), dans lequel au moins unedite plaque grillagée (124) est fixée à ladite plaque (119) de matériau perforé, et dans lequel ladite plaque (119) de matériau perforé comprend deux ensembles s'entrecroisant de rangées sensiblement parallèles de nervures (131, 132) qui sont inclinées vers les côtés opposés dudit (desdits) élément(s) de support (107, 108).

2. Crible selon la revendication 1, caractérisé en ce que lesdites nervures (131, 132) s'entrecroisent suivant un angle α allant de 20° à 90°.

3. Crible selon la revendication 2, caractérisé en ce que l'angle α est de 60°.

4. Crible selon la revendication 2, 3 ou 4, caractérisé en ce que ladite plaque (119) comprend, de plus, un ensemble de rangées de nervures transversales (135) qui s'étendent à travers ledit crible (101) de façon généralement perpendiculaire auxdits éléments de support (107, 108) et qui traversent l'intersection desdites nervures des deux dits ensembles de nervures (131, 132).

5. Crible selon l'une quelconque des revendications précédentes, caractérisé en ce qu'une pluralité d'éléments de support (107, 108) s'étend à travers ledit châssis extérieur (102) et ladite plaque (119) de matériau perforé est fixée à chaque élément.

6. Crible selon la revendication 5, dans lequel lesdits éléments de support (107, 108) sont disposés au niveau des centres entre 140 et 170 mm.

7. Secoueur vibrant adapté à un crible (101) selon l'une quelconque des revendications précédentes, dans lequel au moins un dit élément de support (107, 108) s'étend dans la direction envisagée du déplacement (D) desdites matières solides à travers ledit crible (101).

8. Utilisée ou pour être utilisée dans un crible selon la revendication 1, une plaque (119) de matériau perforé comprenant deux bordures et deux ensembles de rangées de nervures (131, 132) qui sont inclinées l'une par rapport à l'autre et par rapport auxdites bordures, et au moins une plaque grillagée (124) fixée à elle.

9. Plaque selon la revendication 8, dans laquelle lesdites nervures (131, 132) s'entrecroisent suivant un angle α de 20° à90°.

10. Plaque selon la revendication 8 ou 9, incluant un ensemble de rangées de nervures transversales (135) qui s'étendent à travers ledit crible (101) et qui traversent l'intersection desdites nervures desdits deux ensembles de nervures (131, 132).

11. Plaque selon la revendication 8, 9 ou 10, dans laquelle lesdites bordures sont prévues avec des éléments pour fixer la plaque (119) à un secoueur vibrant.
